# EUROPÄISCHE PATENTANMELDUNG

(11) **EP 1 449 720 A2**
(43) Veröffentlichungstag der Anmeldung: **25.08.2004**
(21) Anmeldenummer: 04003440.7
(22) Anmeldetag: 16.02.2004
(51) Int. Cl.: B60R 1/074

(54) **Aussenspiegelsteuerung**

(30) Priorität: 21.02.2003 DE 10307477
(71) Anmelder: Bayerische Motoren Werke Aktiengesellschaft, 80809 München (DE)
(72) Erfinder: Baur, Richard, D-85276 Pfaffenhofen (DE)

(57) **Zusammenfassung**

Die Erfindung betrifft ein Verfahren sowie eine Vorrichtung zur Steuerung elektrisch - zwischen einer Funktionsstellung und einer eingeklappten Stellung - verstellbarer Außenspiegel (4) eines Kraftfahrzeuges (2).

Der Erfindung liegt das Problem zugrunde die Sicherheit bei Fahrzeugen mit einklappbaren Spiegeln (2) zu erhöhen.

Das Problem wird gelöst, indem überprüft wird, ob sich ein Außenspiegel (4) in der eingeklappten Stellung befindet und für den Fall, dass die eingeklappte Stellung festgestellt wird, ein Kontrollsignal erzeugt wird, wobei abhängig von Betriebsgrößen des Kraftfahrzeuges (2) bzw. des Kraftfahrzeugbetriebes eine im Fahrzeuginnenraum durch eine Person wahrnehmbare Zustandsanzeige generiert wird und/oder eine automatische Positionsumstellung in die Funktionsstellung für den eingeklappten Außenspiegel (4) erfolgt.

## Beschreibung

Die Erfindung betrifft ein Verfahren sowie eine Vorrichtung zur Steuerung elektrisch - zwischen einer Funktionsstellung und einer eingeklappten Stellung - verstellbarer Außenspiegel bei einem Kraftfahrzeug.

Es sind bereits Kraftfahrzeuge bekannt, bei denen die Außenspiegel per Knopfdruck zwischen einer Funktionsstellung, in der durch den Außenspiegel eine Sicht nach hinten möglich ist, und einer eingeklappten Stellung, in der der Außenspiegel in Richtung Karosserie angelegt ist, elektrisch verstellbar ist (sogenannte manuelle Einklappfunktion).

Ferner ist aus der DE 101 16 269 A1 zur weiteren Erhöhung des Komforts eine Vorrichtung zum Ein- und Ausklappen von Fahrzeugaußenspiegeln bekannt, die eine Steuereinrichtung umfasst, durch die bei einem Verriegeln des Fahrzeugs die Außenspiegel eingeklappt werden können (sogenannte Komfortschließung). Für den Fall, dass die Außenspiegel aufgrund der Komfortschließung eingeklappt worden sind, ist es möglich, diese durch ein Entriegelungssignal automatisch wieder in die Funktionsstellung zu bewegen. Hierbei kann unterschieden werden, ob die Spiegel zuvor durch eine manuelle Einklappfunktion oder per Komfortschließung eingeklappt worden sind, so dass bei einer manuell erfolgten Einklappung (z.B. vor Einfahrt in eine Garage) die Spiegel nicht oder erst nach Abfrage wieder in die Funktionsstellung bewegt werden.

Der Erfindung liegt die Aufgabe zugrunde, ein Verfahren und eine Vorrichtung zu schaffen, die die zur Erhöhung der Fahrsicherheit beiträgt.

Der Erfindung liegt die Erkenntnis zugrunde, dass bei bislang bekannten Vorrichtungen ein der Fahrzeugführer gegebenenfalls auch in einem Normalbetrieb unbemerkt mit eingeklappten Außenspiegeln das Fahrzeug bewegt und hierdurch, wenn die Spiegel plötzlich benötigt werden, ihm diese nicht zur Verfügung stehen und der Fahrer in eine gefährliche Situation geraten kann. Erfindungsgemäß wird die Aufgabe durch die Gesamtheit der Merkmale der unabhängigen Ansprüche gelöst. Durch die Erfassung der eingeklappten Stellung von mindestens einem Außenspiegel sowie die zusätzliche Erfassung von Betriebsgrößen des Kraftfahrzeugs kann abhängig von diesen Betriebsgrößen ein Kontrollsignal erzeugt werden, mittels welchem eine Zustandsanzeige bzw. ein Warnsignal generiert werden kann. Dabei ist unter Betriebsgröße des Kraftfahrzeugs eine die erfolgte Inbetriebnahme des Fahrzeugs charakterisierende (darstellende) Größe zu verstehen. Beispielsweise sind hier anzuführen: eine bestimmte Drehzahl, aufgrund der von einem störungsfreien sicheren Betrieb ausgegangen werden kann und/oder eine bestimmte Geschwindigkeitsschwelle und/oder ein Zündschlosssignal "Zündung-EIN" ( auch Klemme-15 - Signal genannt). Kraftfahrzeugbetriebs Zusätzlich oder alternativ kann über das Kontrollsignal auch eine automatische Positionsumstellung des bzw. jedes Außenspiegels von der eingeklappten Stellung in die Funktionsstellung (ausgeklappte Stellung) eingeleitet werden. Hierdurch wird erreicht, dass der Fahrer in dem Betrieb des Fahrzeugs, in dem er die Außenspiegel in Funktionsstellung benötigt, diese sich auch in dieser befinden. Weitere Vorteile der Erfindung sind in den Unteransprüchen und in der nachfolgenden Beschreibung des Ausführungsbeispiels beschrieben.

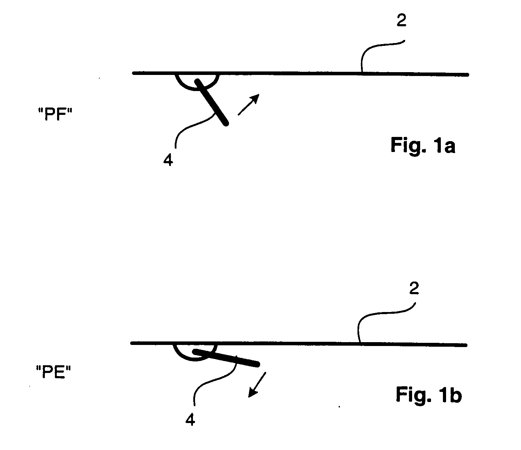

Im folgenden wird die Erfindung näher erläutert. Hierfür dienen insbesondere die beiden Figuren 1 a und 1 b, wobei in diesen Figuren schematisch lediglich die beiden Stellungen - zwischen denen der Außenspiegel elektrisch verstellbar ist - dargestellt sind.

In Figur 1a ist ein an einer Fahrzeugkarosserie 2 außenseitig angeordneter Außenspiegel 4 in seiner Funktionsstellung PF schematisch dargestellt. Die Figur 1 b zeigt den Außenspiegel 4 gemäß Figur 1 a in eingeklappter Stellung PE.

Bei einem derartigen Außenspiegel 4, ist insbesondere sowohl das, in einem Spiegelgehäuse beweglich gelagerte Spielelement (zur personenbezogenen Einstellung der Sichtverhältnisse) elektrisch ver- bzw. einstellbar, als auch unabhängig hiervon, der gesamte Außenspiegel 4 mit Spiegelgehäuse und Spiegelelement zwischen den beiden Positionen Funktionsstellung PF und eingeklappte Stellung PE bewegbar und elektrisch verstellbar angeordnet. So ist es in verschiedenen Ausführungen denkbar, dass das Spiegelgehäuse automatisch eingeklappt wird, sobald beispielsweise durch seitlich angeordnete Abstandssensoren insbesondere im Frontbereich des Fahrzeugs oder an den Außenspiegeln selbst ein zu geringer Seitenabstand erfasst wird oder dass das Spiegelgehäuse einfach durch eine vom Fahrer per Knopfdruck angeforderte Positionsänderung der/(des) Außenspiegel(s) (z.B. vor Einfahrt in eine Garage oder eine Waschstraße) von der Funktionsstellung in die eingeklappte Stellung PE überführt wird. Dabei können entweder beide Spiegel gemeinsam oder separat jeder für sich entweder aufgrund entsprechender Abstandssensordaten automatisch oder aber aufgrund einer Fahreranforderung manuell angesteuert werden. Die automatische Einklappung des/jedes Spiegels, ausgelöst durch die seitlichen Abstandssensoren ist auch als separate Lösung, d.h. unabhängig von der erfindungsgemäßen automatischen Spiegelausklappung realisierbar.

Erfindungsgemäß wird überprüft, ob sich zumindest ein Außenspiegel in eingeklappter Stellung PE befindet und für den Fall, dass eine eingeklappte Stellung PE festgestellt wird, wird ein Kontrollsignal erzeugt und abhängig von Betriebsgrößen des Kraftfahrzeuges bzw. des Kraftfahrzeugbetriebs wird über das Kontrollsignal eine im Fahrzeuginnenraum von einer Person wahrnehmbare Zustandsanzeige generiert und/oder eine Positionsumstellung von der eingeklappten Stellung PE in die Funktionsstellung PF eingeleitet. Dabei ist unter Betriebsgröße des Kraftfahrzeugs eine die erfolgte Inbetriebnahme des Fahrzeugs charakterisierende (darstellende) Größe zu verstehen. Beispielsweise sind hier anzuführen: eine bestimmte Drehzahl, aufgrund der von einem störungsfreien sicheren Betrieb ausgegangen werden kann und/oder eine bestimmte Geschwindigkeitsschwelle und/oder ein Zündschlosssignal "Zündung-ElN" ( auch Klemme-15 - Signal genannt).

Die Überprüfung der Außenspiegelstellung erfolgt bevorzugt zeitlich fortlaufend (kontinuierlich) oder abtastend innerhalb kurzer Zeitintervalle durch ein hierfür geeignetes Steuergerät. Dies hat zum Vorteil, dass nicht nur eine eingeklappte Stellung PE erkannt wird, die tatsächlich auch elektrisch veranlasst worden ist (manuell oder automatisch, wie vorstehend bereits beschrieben) - sondern es wird auch eine durch mechanische Einflüsse erfolgte Einklappung (z.B. durch manuelle Anklappung der Spiegel im Nichtbetrieb des Fahrzeuges) der Spiegel erkannt. Die Überprüfung kann aber auch nur zu bestimmten Zeiten beispielsweise ereignisorientiert erfolgen. Bei den Mitteln zur Überprüfung der Außenspiegelstellung sowie den Mitteln zur Ansteuerung der Außenspiegel handelt es sich vorzugsweise um ein bereits vorhandenes Steuergerät (z.B. in der Tür angeordnetes Türsteuergerät zur Ansteuerung von Scheiben- und/oder Spiegelmotoren und/oder Türschloss oder dergleichen), welches z.B. durch Software- und/oder Hardwareänderungen entsprechend angepasst worden ist.

Mögliche Ereignisse könnten z.B. das Starten des Fahrzeugs oder der Befehl zum elektrischen Einschwenken in die eingeklappte Stellung (mit zeitlicher verzögerter Überprüfung) oder dergleichen sein. Mögliche Betriebsgrößen, von denen abhängig die Erzeugung eines Warnsignals und/oder die automatische Verstellung des bzw. jedes Außenspiegels von der eingeklappten Stellung PE in die Funktionsstellung PF erfolgt, können auch sein: Fahrgeschwindigkeit und/oder eingelegter Gang (bzw. Getriebestellung) und/oder zurückgelegte Wegstrecke seit Erkennung der eingeklappten Stellung PE und/oder vergangene Zeit seit Erkennung der eingeklappten Stellung PE. Eine wahrnehmbare Zustandsanzeige kann beispielsweise realisiert werden durch: Betätigung einer Kontrolllampe und/oder eine akustisches Warnsignal und/oder eine Meldung per Display (z.B. Radio oder Navigationssystem).

## Patentansprüche

1. Verfahren zur Steuerung elektrisch - zwischen einer Funktionsstellung (PF) und einer eingeklappten Stellung (PE) - verstellbarer Außenspiegel (4) eines Kraftfahrzeuges, mit folgenden Verfahrensschritten:
- Prüfung, ob mindestens ein Außenspiegel (4) sich in der eingeklappten Stellung (PE) befindet,
- für den Fall, dass die eingeklappte Stellung (PE) festgestellt wird, wird ein Kontrollsignal erzeugt,
- und abhängig von mindestens einer Betriebsgröße des Kraftfahrzeuges wird über dieses Kontrollsignal eine im Fahrzeuginnenraum von einer Person wahrnehmbare Zustandsanzeige generiert und/oder eine Positionsumstellung in die Funktionsstellung (PF) für den mindestens einen eingeklappten Außenspiegel (4) eingeleitet.

2. Verfahren nach Anspruch 1,
**dadurch gekennzeichnet, dass** jeder einzelne Außenspiegel (4) oder beide Außenspiegel (4) gemeinsam über einen auslösbaren Steuerbefehl in die eingeklappte Stellung (PE) überführt wird/werden, wobei der Steuerbefehl ausgelöst wird, wenn ein hierfür vorgesehenes Bedienelement manuell betätigt wird.

3. Verfahren nach Anspruch 1,
**dadurch gekennzeichnet, dass** jeder einzelne Außenspiegel (4) oder beide Außenspiegel (4) gemeinsam automatisch in Abhängigkeit von dem, durch Abstandssensoren erfassbaren Seitenabstand des Fahrzeuges bzw. des/jedes Außenspiegels (4) zu einem seitlichen Hindernis in die eingeklappte Stellung (PE) überführt wird/werden.

4. Verfahren nach einem der vorstehenden Ansprüche,
**dadurch gekennzeichnet, dass** die Betriebsgröße durch die Fahrgeschwindigkeit und/oder den eingelegten Gang und/oder die zurückgelegte Wegstrecke seit Erkennung der eingeklappten Stellung (PE) und/oder die vergangene Zeit seit Erkennung der eingeklappten Stellung (PE) gebildet wird.

5. Vorrichtung zur Steuerung elektrisch - zwischen einer Funktionsstellung (PF) und einer eingeklappten Stellung (PE) - verstellbarer Außenspiegel (4) eines Kraftfahrzeuges mit
- Prüfmitteln zur Überprüfung, ob sich ein Außenspiegel (4) in der eingeklappten Stellung (PE) befindet sowie mit
- Steuermitteln zur Erzeugung eines Kontrollsignals mittels welchem für den Fall, dass die eingeklappte Stellung (PE) festgestellt wird, ein Kontrollsignal erzeugt wird und abhängig von Betriebsgrößen des Kraftfahrzeuges bzw. des Kraftfahrzeugbetriebes eine im Fahrzeuginnenraum durch eine Person wahrnehmbare Zustandsanzeige generierbar ist und/oder eine automatische Positionsumstellung in die Funktionsstellung (PF) für den eingeklappten Außenspiegel (4) einleitbar ist.

6. Vorrichtung nach vorstehendem Anspruch,
**dadurch gekennzeichnet, dass** jeder einzelne Außenspiegel (4) oder beide Außenspiegel (4) gemeinsam über einen per Knopfdruck auslösbaren Steuerbefehl in die eingeklappte Stellung (PE) überführbar ist/sind.

7. Vorrichtung nach einem der beiden vorstehenden Ansprüche,
**dadurch gekennzeichnet, dass** jeder einzelne Außenspiegel (4) oder beide Außenspiegel (4) gemeinsam automatisch in Abhängigkeit von dem, durch Abstandssensoren erfassbaren Seitenabstand des Fahrzeuges bzw. des/jedes Außenspiegels (4) zu einem seitlichen Hindernis in die eingeklappte Stellung (PE) überführbar ist/sind.

8. Vorrichtung nach einem der vorstehenden Ansprüche 5-7,
**dadurch gekennzeichnet, dass** die Betriebsgröße durch die Fahrgeschwindigkeit und/oder den eingelegten Gang und/oder die zurückgelegte Wegstrecke seit Erkennung der eingeklappten Stellung (PE) und/oder die vergangene Zeit seit Erkennung der eingeklappten Stellung (PE) gebildet wird.
